## Europäisches Patentamt

## European Patent Office

## Office européen des brevets

(19)

(11) Veröffentlichungsnummer: **0 184 142**
**B1**

(12) **EUROPÄISCHE PATENTSCHRIFT**

(45) Veröffentlichungstag der Patentschrift:
**08.02.89**

(51) Int. Cl.⁴: **G 01 P 1/10**

(21) Anmeldenummer: **85115116.7**

(22) Anmeldetag: **28.11.85**

(54) **Schleifkontaktschalter für eine Signaleinrichtung in einem Fahrtschreiber.**

(30) Priorität: **06.12.84 DE 3444524**

(43) Veröffentlichungstag der Anmeldung:
**11.06.86 Patentblatt 86/24**

(45) Bekanntmachung des Hinweises auf die Patenterteilung:
**08.02.89 Patentblatt 89/6**

(84) Benannte Vertragsstaaten:
**DE FR GB IT**

(56) Entgegenhaltungen:
**FR-A- 532 837**
**FR-A- 2 017 537**
**GB-A- 905 200**

(73) Patentinhaber: **Mannesmann Kienzle GmbH,
Heinrich-Hertz-Strasse, D-7730 Villingen-Schwenningen
(DE)**

(72) Erfinder: **Schultze, Hartmut, Oskar-Joos-Strasse 1,
D-7730 Villingen-Schwenningen (DE)**

## Beschreibung

Die Erfindung betrifft einen Schleifkontaktschalter für eine Signaleinrichtung in einem Fahrtschreiber mit einem messwertabhängig antreibbaren ersten Kontaktträger und einem diesem drehbar zugeordneten, als eine mit einer Skale und einem Einstellorgan versehene Einstellscheibe ausgebildeten zweiten Kontaktträger und mit Mitteln, welche ein Einstellen des Schaltpunktes innerhalb eines Winkelbereichs von 0° bis zu einem Winkel > 180° gestatten.

Bekanntlich muss der Schaltpunkt der in Fahrtschreibern üblichen der Geschwindigkeitswarnung dienenden Signaleinrichtungen, um den verschiedenen Anwendungsfällen und Strassenverkehrsvorschriften gerecht werden zu können, einstellbar sein. Da es sich bei der Geschwindigkeitswarnung aber um eine relativ untergeordnete Funktion des Fahrtschreibers handelt, bestand bisher die Forderung den Aufwand und den Raumbedarf der hierfür erforderlichen Einstell- und Schaltmittel so weit als möglich zu reduzieren. Parallel hierzu wurde eine mangelhafte Schaltgenauigkeit und eine unbefriedigende Einstellbarkeit des Schaltpunktes in Kauf genommen, zumal eine solche Einstellung relativ selten vorgenommen werden muss.

Eine typische Einrichtung dieser Art zeigt die DE-Ps 1 774 784. Die schaltende Kontaktbahn ist dort auf einem im Getriebezug zwischen dem Geschwindigkeitsregistrierschlitten und einem diesen antreibenden Aggregat des Fahrtschreibers befindlichen Zahnrad angebracht. Auf der Achse des Zahnrades ist mittels einer geeigneten Friktion, die in diesem Falle durch eine Drahtfeder gebildet wird, die gleichzeitig als axiale Sicherung dient, eine Einstellscheibe drehbar gelagert, welche wenigstens die mit der Kontaktbahn in Wirkverbindung stehenden Kontaktfedern sowie eine Einstellskala trägt. An der Abdeckscheibe ist ein Betätigungsschlitz ausgebildet.

Bei dieser allgemein üblichen Einrichtung ist ersichtlich, dass, weil sonst im Ruhezustand der Kontaktbahn eine Kontaktgabe erfolgen würde, weder Einstellwinkel noch messwertproportionale Drehwinkel > 180° möglich sind, und dass sich die Einstellskale auf der Einstellscheibe, will man eine zusätzliche getriebliche Verbindung zwischen der Einstellscheibe und dem ihr zugeordneten Kontakt des Schleifkontaktschalters vermeiden, auf einen Winkel < 180° zusammendrängt. Für die Geschwindigkeitswarnung, bei der untere Geschwindigkeitsbereiche im allgemeinen nicht zu berücksichtigen sind und im wesentlichen nur die wenigen gesetzlich vorgeschriebenen Geschwindigkeitswerte einstellbar sein müssen, ist dieser Kompromiss an sich noch tragbar. Er kann jedoch dann nicht mehr eingegangen werden, wenn, will man die raum- und aufwandmässig vorteilhafte bauliche Anordnung zentral zu einem rotierenden Bauelement nutzen, diese Einrichtung z.B. auch für eine bisher nicht übliche Drehzahlwarnung vorgesehen wird. In diesem Falle muss, weil eine Warnung sowohl bei niedrigen Motordrehzahlen, z.B. um Einfahrvorschriften besser einhaltbar zu machen oder die Drehzahl eines Zusatzaggregates zu überwachen, als auch bei hohen Motordrehzahlen wünschenswert sein kann und ausserdem eine Vielfalt von Motoren zu berücksichtigen ist, ein wesentlich grösserer Messwertebereich einstellbar sein. Bei der bevorzugten Einrichtung ist jedoch die für eine befriedigende Schaltgenauigkeit und Einstellbarkeit erforderliche Auflösbarkeit des gewünschten Einstellbereichs denkbar schlecht.

Ziel der vorliegenden Erfindung war es daher, ausgehend von der DE-PS 1 774 784, den Schleifkontaktschalter derart auszubilden, dass er möglichst ohne zusätzlichen Aufwand einen Einstellwinkel > 180° zulässt.

Die Lösung dieser Aufgabe sieht vor, dass an dem mit der Kontaktbahn des Schleifkontaktschalters versehenen Kontaktträger zentrisch zur Kontaktbahn sowohl eine der Kontaktfeder des Schleifkontaktschalters zugeordnete und ein Abheben der Kontaktfeder von der Kontaktbahn bewirkende Rampe als auch eine ein Hintergreifen der Rampe durch die Kontaktfeder ermöglichende Kulisse ausgebildet sind.

Ferner wird vorgeschlagen, dass die Kontaktbahn, die Rampe und die Kulisse der Einstellscheibe zugeordnet sind.

Ein bevorzugtes Ausführungsbeispiel der Erfindung ist dadurch gekennzeichnet, dass der Schleifkontaktschalter dem Winkelgeber eines in dem Fahrtschreiber vorgesehenen Nachlaufmesssystems zugeordnet ist und dass auf dem messwertabhängig angetriebenen Schleiferträger des Winkelgebers der eine Kontakt des Schleifkontaktschalters angeordnet ist.

Der Vorteil, den die Erfindung dietet, ist darin zu sehen, dass das Ziel einer verbesserten Einstellbarkeit und Schaltgenauigkeit ohne zusätzlichen Aufwand erreicht worden ist, insbesondere dass ohne Zwischenübersetzung zwischen dem einen Kontaktträger und der Einstellscheibe eine ausreichend aufgelöste und gut lesbare Skale auf der Einstellscheibe aufdruckbar ist und dass mit dem Anordnen des Schleifkontaktschalters zentrisch zu einer sozusagen zeigerausschlagidentischen Welle, beispielsweise der Potentiometerwelle eines Nachlaufmesssystems, eine in besonderer Weise optinierte Lösung gefunden wurde.

Im folgenden sei das bevorzugte Ausführungsbeispiel der Erfindung anhand der beigefügten Zeichnungen näher erläutert. Es zeigen:

Fig. 1 ein Schnittbild des einem Winkelgeber eines Nachlaufmesssystems zugeordneten Schleifkontaktschalters,

Fig. 2 Ansichten der einzelnen Bauteile des bevorzugten Ausführungsbeispiels in einer perspektivisch gestaffelten Darstellung,

Fig. 3 eine Hintersicht der Einstellscheibe und der ihr zugeordneten Kontaktfeder in einer ersten Einstellposition,

Fig. 4 eine Hintersicht der Einstellscheibe in einer zweiten Einstellposition.

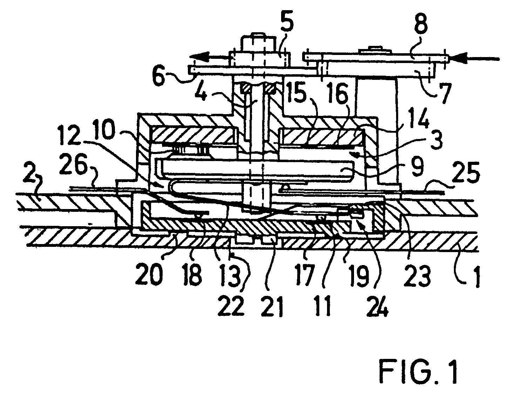

Gemäss Fig. 1 ist an einer Gehäusewand 1 eines Fahrtschreibers, beispielsweise am Boden des aufklappbaren Deckels des Fahrtschreibers, in geeigneter Weise ein Gestell 2 befestigt, das unter anderem der Aufnahme eines Winkelgebers 3 eines in dem Fahrtschreiber verwendeten Nachlaufmesssystems dient. Die Welle 4 des Winkelgebers 3, welche in dem Gestell 2 gelagert ist, wird von einem nicht dargestellten Stellmotor des Nachlaufmesssystems über ein den Kraftfluss (Pfeile) leitendes Getriebe, von welchem lediglich ein auf der Welle 4 befestigtes Zahnradpaar 5/6 und ein mit diesem in Eingriff stehendes Zahnradpaar 7/8 dargestellt ist, messwertabhängig, d.h. geschwindigkeits- oder drehzahlproportional angetrieben. An einem ebenfalls auf der Welle 4 befestigten Schleiferträger 9 ist einerseits eine dem Winkelgeber 3 zugeordnete Schleiffeder 10, andererseits eine den einen Kontakt 11 des Schleifkontaktschalters 12 tragende Kontaktfeder 13 angeordnet. Die Schleiffeder 10 wirkt mit auf einem Träger 14 angebrachten, aus leitendem Kunststoffmaterial bestehenden Widerstandsbahnen 15 und 16 zusammen, während dem Kontakt 11 eine auf einer Einstellscheibe 17 angebrachte Kontaktbahn 18 zugeordnet ist. Wie die Fig. 1 ferner zeigt, ist die Einstellscheibe 17 zwischen dem Gestell 2 und der Gehäusewand 1 relativ lose angeordnet und wird von der Kontaktfeder 13 in einer sowohl an der Einstellscheibe 17 als auch an der Gehäusewand 1 ausgebildeten Rastverzahnung 19 bzw. 20 gehalten. Ein an der Einstellscheibe 17 angeformter, geschlitzter Ansatz 21 dient als Einstellorgan und ist durch eine in der Gehäusewand 1 befindliche Öffnung 22 zugänglich. Ausserdem sind an der Einstellscheibe 17 senkrecht zur Kontaktbahn 18 sowohl eine in die Bewegungsbahn der Kontaktfeder 13 eingreifende Rampe 23, als auch eine dieser zugeordnete Kulisse 24 ausgebildet. Kontaktfedern 25 und 26 dienen der elektrischen Verbindung des Schleifkontaktschalters 12 mit einem Signalstromkreis.

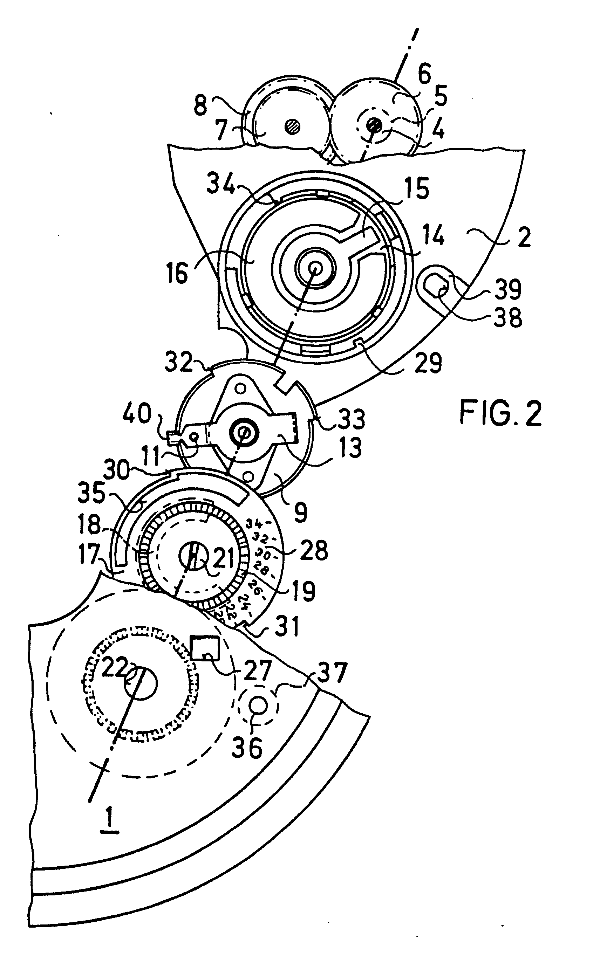

Aus der Fig. 2 geht hervor, dass in der Gehäusewand 1 des Fahrtschreiberdeckels ein Fenster 27 ausgespart ist, durch welches die Ziffern einer auf der Einstellscheibe 17 aufgedruckten Skale 28 beobachtbar sind. Als Drehbegrenzung dienen im Zusammenwirken mit einem am Gestell 2 angeformten Anschlag 29 Stirnflächen 30 und 31 eines an der Einstellscheibe 17 ausgebildeten, nicht näher bezeichneten radialen Ansatzes. In gleicher Weise wirken auch am Schleiferträger 9 ausgebildete Stirnflächen 32 und 33 mit einem weiteren, am Gestell 2 vorgesehenen Anschlag 34 zusammen. Ferner ist aus der Fig. 2 ersichtlich, dass in der Einstellscheibe 17 eine Senkung 35 vorgesehen ist, mit der die Rampe 23 und die Kulisse 24 bildbar sind. Der Vollständigkeit halber sei noch erwähnt, dass ein an der Gehäusewand 1 ausgebildetes und mit einer Bohrung 36 versehenes Auge 37 und eine im Gestell 2 ausgeformte, mit einer Öffnung 38 versehene Senkung 39 der Lagefixierung und der Befestigung des Gestells 2 an der Gehäusewand 1 dienen.

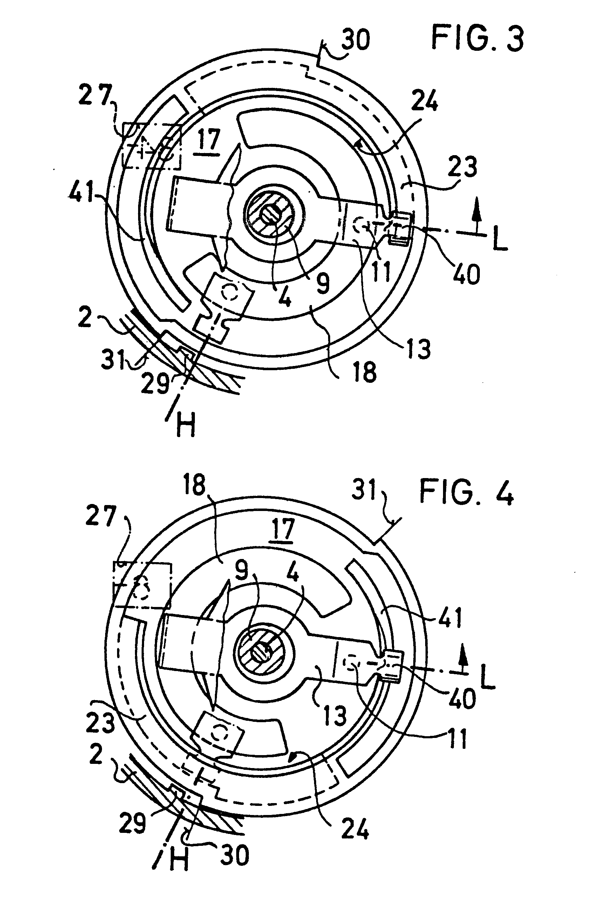

Die Fig. 3 zeigt eine Hintersicht der Einstellscheibe 17 in einer Einstellposition, bei der der Höchstwert eingestellt und im Fenster 27 sichtbar ist. Die der Einstellscheibe 17 zugeordnete Kontaktfeder 13 liegt in der dargestellten Nullage L in dieser Einstellposition der Einstellscheibe 17 mit ihrem angewinkelt ausgebildeten Führungsfortsatz 40 auf der Rampe 23 auf. Der Kontakt 11 ist von der Kontaktbahn 18 abgehoben. Wird der Schleiferträger 9 und somit die Kontaktfeder 13 (in Fig. 3 im Gegenuhrzeigersinn) verschwenkt, so bleibt die Kontaktfeder 13 zunächst angehoben und gleitet dann über eine den Anstieg zur Rampe 23 vermittelnde Rippe 41 ab, wodurch der Kontakt 11 mit der Kontaktbahn 18 in Berührung kommt. Mit H ist die Vollausschlagstellung der Kontaktfeder 13 bezeichnet.

Demgegenüber zeigt Fig. 4 eine Einstellposition der Einstellscheibe 17, bei der der niedrigste Wert, bei dem eine Signalgabe erfolgen soll, eingestellt und im Fenster 27 sichtbar ist. In der Nullage L liegt bei dieser Einstellposition der Einstellscheibe 17 der Führungsfortsatz 40 der Kontaktfeder 13 noch auf der Rippe 41 auf. Wird die Kontaktfeder 13 messwertabhängig (wiederum im Gegenuhrzeigersinn) verschwenkt, so schliesst der Schleifkontaktschalter 12 bereits nach einem relativ kurzen Ausschlag und bleibt bis zum Vollausschlag H der Kontaktfeder 13 geschlossen. Dies wird dadurch ermöglicht, dass der Führungsfortsatz 40 der Kontaktfeder 13 in die unter der Rampe 23 befindliche Kulisse 24 eintaucht.

## Patentansprüche

1. Schleifkontaktschalter für eine Signaleinrichtung in einem Fahrtschreiber mit einem messwertabhängig antreibbaren ersten Kontaktträger und einem diesem drehbar zugeordneten, als eine mit einer Skale und einem Einstellorgan versehene Einstellscheibe ausgebildeten zweiten Kontaktträger und mit Mitteln, welche ein Einstellen des Schaltpunktes innerhalb eines Winkelbereichs gestatten, dadurch gekennzeichnet, dass der Winkelbereich auch Winkel > 180° umfasst, dass an dem mit der Kontaktbahn (18) des Schleifkontaktschalters (12) versehenen Kontaktträger zentrisch zur Kontaktbahn (18) sowohl eine der Kontaktfeder (13) des Schleifkontaktschalters (12) zugeordnete und ein Abheben der Kontaktfeder (13) von der Kontaktbahn (18) bewirkende Rampe (23) als auch eine ein Hintergreifen der Rampe (23) durch die Kontaktfeder (13) ermöglichende Kulisse (24) ausgebildet sind.

2. Schleifkontaktschalter nach Anspruch 1, dadurch gekennzeichnet, dass die Kontaktbahn (18), die Rampe (23) und die Kulisse (24) der Einstellscheibe (17) zugeordnet sind.

3. Schleifkontaktschalter nach Anspruch 1 und 2, dadurch gekennzeichnet, dass an der einen Planseite der Einstellscheibe (17) zentrisch zu einem als Einstellorgan dienenden, geschlitzten Ansatz (21) eine Rastverzahnung (19) ausgebildet ist, dass die Einstellscheibe (17) an einer Gehäusewand (1) des Fahrtschreibers drehbar gehaltert ist und dass an der Gehäusewand (1) der Rastverzahnung (19) der Einstellscheibe (17) zugeordnete Rastmittel (20) ausgebildet sind.

4. Anwendung des Schleifkontaktschalters nach Anspruch 1, bei der dieser Schleifkontaktschalter dem Winkelgeber (3) eines in dem Fahrtschreiber vorgesehenen Nachlaufmesssystems zugeordnet ist und auf dem messwertabhängig angetriebenen Schleiferträger (9) des Winkelgebers (3) der eine Kontakt (11) des Schleifkontaktschalters (12) angeordnet ist.

## Claims

1. Sliding contact switch for a signal apparatus in a tachograph, having a first contact carrier which can be driven as a function of a measured value and a second contact carrier which is rotatably associated with the latter and is constructed as an adjustement disc provided with a scale and an adjustement element, and having means which enable the switch point to be adjusted within an angle range, characterised in that the angle range also comprises angles > 180°, in that, on the contact carrier provided with the contact path (18) of the sliding contact switch (12), there are constructed centrally with respect to the contact path (18) both a ramp (23), which is associated with the contact spring (13) of the sliding contact switch (12) and effects a lifting away of the contact spring (13) from the contact path (18), and also a connecting link (24) enabling the contact spring (13) to reach behind the ramp (23).

2. Sliding contact switch according to claim 1, characterised in that the contact path (18), the ramp (23) and the connecting link (24) are associated with the adjustement disc (17).

3. Sliding contact switch according to claims 1 and 2, characterised in that a latching serration (19) is constructed on one planar side of the adjustement disc (17) centrally with respect to a slotted lug (21) serving as an adjustement element, in that the adjustement disc (17) is rotatably mounted on a housing wall (1) of the tachograph, and in that latching means (20) associated with the latching serration (19) of the adjustement disc (17) are constructed on the housing wall (1).

4. Use of the sliding contact switch according to claim 1, in which this sliding contact switch is associated with the angle transmitter (3) of a servo measurement system provided in the tachograph, and one contact (11) of the sliding contact switch (12) is arranged on the slide carrier (9) of the angle transmitter (3), which carrier is driven as a function of the measured value.

## Revendications

1. Commutateur à contacts glissants pour un dispositif de signalisation dans un enregistreur de route avec un premier support de contact pouvant être entraîné en fonction des paramètres de mesure et un deuxième support de contact réalisé sous forme d'un disque de réglage pourvu d'un organe de réglage et d'un cadran et qui est associé, par rotation, audit premier support de contact, et avec des moyens qui permettent un réglage du point de commutation à l'intérieur d'une zone angulaire, caractérisé par le fait que la zone angulaire comprend également des angles de > 180°, que sur le support de contact pourvu de la voie de contact (18) du commutateur à contacts glissants (12) sont formées, d'une manière centrée par rapport à ladite voie de contact (18), d'une part, une rampe (23) associée au ressort de contact (13) du commutateur à contacts glissants (12) et opérant un écartement dudit ressort de contact (13) de ladite voie de contact (18) et, d'autre part, une coulisse (24) permettant audit ressort de contact (13) de passer derrière la rampe (23).

2. Commutateur à contacts glissants selon la revendication 1, caractérisé par le fait que la voie de contact (18), la rampe (23) et la coulisse (24) sont associées au disque de réglage (17).

3. Commutateur à contacts glissants selon l'une quelconque des revendications 1 et 2, caractérisé par le fait que sur l'une des faces planes du disque de réglage (17) est formée, d'une manière centrée par rapport à un épaulement fendu (21) servant d'organe de réglage, une denture d'arrêt (19), que le disque de réglage (17) est monté à rotation sur une paroi de boîtier (1) de l'enregistreur de route et que des moyens d'arrêt (20) associés à la denture d'arrêt (19) du disque de réglage (17) sont formés sur la paroi de boîtier (1).

4. Application du commutateur à contacts glissants selon la revendication 1, dans laquelle ledit commutateur à contacts glissants est associé au capteur d'angle (3) d'un système de mesure asservi prévu dans l'enregistreur de route et où l'un des contacts (11) du commutateur à contacts glissants (12) est disposé sur le porte-balai (9) entraîné en fonction des paramètres de mesure du capteur d'angle (3).

FIG. 1

FIG. 2

FIG. 3

FIG. 4